# EUROPEAN PATENT APPLICATION

(11) **EP 3 567 543 A1**
(43) Date of publication of application: **13.11.2019**
(21) Application number: 17890364.7
(22) Date of filing: 21.11.2017
(51) Int. Cl.: G06Q 50/10, G06Q 20/32, G06Q 30/02

(54) **INFORMATION PROCESSING DEVICE AND PROGRAM**

(30) Priority: 05.01.2017 JP 2017000556
(71) Applicant: FeliCa Networks, Inc., Tokyo 141-0032 (JP)
(72) Inventor: ODA, Yoshio, Tokyo 141-0032 (JP)
(74) Representative: Witte, Weller & Partner Patentanwälte mbB
(86) International application number: PCT/JP2017/041907
(87) International publication number: WO 2018/128023

(57) **Abstract**

Provided is an information processing apparatus including a processing unit that displays a display indicating types of a plurality of payment methods available at a predetermined place on a map, in association with the predetermined place.

## Description

### TECHNICAL FIELD

The present disclosure relates to an information processing apparatus and a program.

### BACKGROUND ART

Currently, users can purchase products or services using diverse payment methods. For example, a user can purchase a product using electronic money or a credit card. Furthermore, in the purchase of products or services using electronic money or a credit card, benefits are sometimes granted on the basis of the use of electronic money or a credit card.

Patent Document 1 discloses an information processing apparatus that displays a benefit related to a payment method available for a user before processing electronic money payment or credit card payment in a situation as described above.

### CITATION LIST

### PATENT DOCUMENT

Patent Document 1: Japanese Patent Application Laid-Open No. 2007-310575

### SUMMARY OF THE INVENTION

### PROBLEMS TO BE SOLVED BY THE INVENTION

The technology disclosed in Patent Document 1 provides the user with benefits related to the available payment methods. However, in the technology disclosed in Patent Document 1, the user cannot easily recognize a plurality of payment methods available at a specific place.

In view of the above situation, the present disclosure will propose an information processing apparatus and a program that allow a user to easily recognize a plurality of payment methods available at a specific place.

### SOLUTIONS TO PROBLEMS

According to the present disclosure, an information processing apparatus is provided, the information processing apparatus including a processing unit that displays a display indicating types of a plurality of payment methods available at a predetermined place on a map, in association with the predetermined place.

Furthermore, according to the present disclosure, an information processing method is provided, the information processing method causing a computer to display a display indicating types of a plurality of payment methods available at a predetermined place on a map, in association with the predetermined place.

In addition, according to the present disclosure, a program is provided, the program causing a computer to implement a function of displaying a display indicating types of a plurality of payment methods available at a predetermined place on a map, in association with the predetermined place.

### EFFECTS OF THE INVENTION

As described above, according to the present disclosure, a user can easily recognize a plurality of payment methods available at a specific place.

Note that the above-mentioned effect is not necessarily limited, and any effects indicated in the present description or other effects that can be learned from the present description may be exhibited together with the above-mentioned effect or instead of the above-mentioned effect.

### BRIEF DESCRIPTION OF DRAWINGS

Fig. 1 is a diagram schematically illustrating a payment method display system according to an embodiment of the present disclosure.
Fig. 2 is a block diagram illustrating an example of a functional configuration of a smartphone according to the embodiment of the present disclosure.
Fig. 3 is a diagram illustrating an example of a hardware configuration of the smartphone according to the embodiment of the present disclosure.
Fig. 4 is a block diagram illustrating an example of a functional configuration of a server according to the embodiment of the present disclosure.
Fig. 5 is a diagram illustrating an example of a hardware configuration of the server according to the embodiment of the present disclosure.
Fig. 6 is a diagram illustrating an example of a screen displayed on a display unit of the smartphone in the embodiment of the present disclosure.
Fig. 7 is a diagram illustrating an example of an information processing method according to the embodiment of the present disclosure.
Fig. 8 is a diagram illustrating an example of an information processing method of the server in the embodiment of the present disclosure.
Fig. 9 is a diagram illustrating an example of an information processing method according to the embodiment of the present disclosure.
Fig. 10 is a diagram illustrating an example of a screen displayed on the display unit of the smartphone in the embodiment of the present disclosure.
Fig. 11 is a diagram illustrating an example of an operation method for changing information displayed on the display unit of the smartphone in the embodiment of the present disclosure.
Fig. 12 is a diagram illustrating an example of a screen displayed on the display unit of the smartphone in the embodiment of the present disclosure.
Fig. 13 is a diagram illustrating an example of a screen displayed on the display unit of the smartphone in the embodiment of the present disclosure.
Fig. 14 is a diagram illustrating an example of a screen displayed on the display unit of the smartphone in the embodiment of the present disclosure.
Fig. 15 is a diagram illustrating an example of an information processing method according to the embodiment of the present disclosure.
Fig. 16 is a diagram illustrating an example of benefit conditions in the embodiment of the present disclosure.
Fig. 17 is a diagram illustrating an example of a screen displayed on the display unit of the smartphone in the embodiment of the present disclosure.
Fig. 18 is a diagram illustrating an example of an information processing method according to the embodiment of the present disclosure.
Fig. 19 is a diagram illustrating an example of an information processing method according to the embodiment of the present disclosure.

### MODE FOR CARRYING OUT THE INVENTION

Hereinafter, favorable embodiments of the present disclosure will be described in detail with reference to the accompanying drawings. Note that, in the present description and the drawings, constituent elements having substantially the same functional configuration will be denoted by the same reference numeral and redundant description will be omitted.

Note that the description will be given in the following order.
1. Overview of Payment Method Display System
2. Configuration of Apparatuses constituting Payment Method Display System
3. Information Processing Methods in Payment Method Display System
4. Supplemental Items
5. Conclusion

### <1. Overview of Payment Method Display System>

Embodiments of the present disclosure relate to a payment method display system. First, an overview of the payment method display system according to an embodiment of the present disclosure will be described.

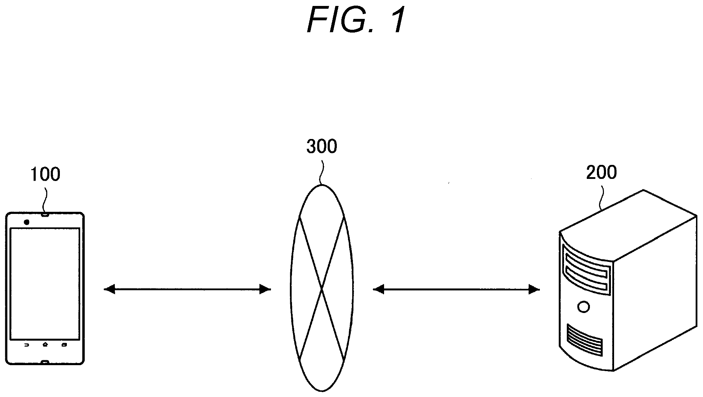

Fig. 1 is a diagram illustrating the configuration of the payment method display system according to the embodiment of the present disclosure. As illustrated in Fig. 1, the payment method display system according to the present embodiment is configured from a smartphone 100, a network 300, and a server 200. Here, the smartphone 100 and the server 200 are examples of an information processing apparatus that executes an information processing method of the present disclosure.

The smartphone 100 is operated by a user and performs a process according to the user's operation. For example, a plurality of applications is installed in the smartphone 100, and the applications are executed according to the user's operation. The applications installed in the smartphone 100 include, for example, an application for displaying a map.

Furthermore, the smartphone 100 may have a function of acquiring position information regarding the smartphone 100 and displaying a map on the basis of the acquired position information. At this time, the smartphone 100 may transmit the acquired position information to the server 200 via the network 300. Then, the smartphone 100 receives map data based on the transmitted position information from the server 200 and displays a map on the basis of the received map data. Note that the position information transmitted by the smartphone 100 may not be information indicating the position of the smartphone 100. For example, the position information transmitted by the smartphone 100 may be position information designated in response to the operation by the user.

The server 200 receives the position information from the smartphone 100 via the network 300 and generates map data on the basis of the received position information. Furthermore, the server 200 holds a database in which a predetermined place on a map (for example, a shop such as a restaurant) is linked with a plurality of payment methods available at this predetermined place, and refers to the database to generate the map data such that a display indicating the types of a plurality of payment methods available at a predetermined place on the map is displayed.

Here, the payment method is a method to pay for a product or service, such as a credit card or electronic money. Then, for example, in a case where the payment method is a credit card, the type of payment method may be a credit card brand name (for example, JCB (registered trademark) or VISA (registered trademark)). Furthermore, for example, in a case where the payment method is electronic money, the type of payment method may be a brand name of electronic money (for example, Suica (registered trademark), Edy (registered trademark), or nanaco (registered trademark)).

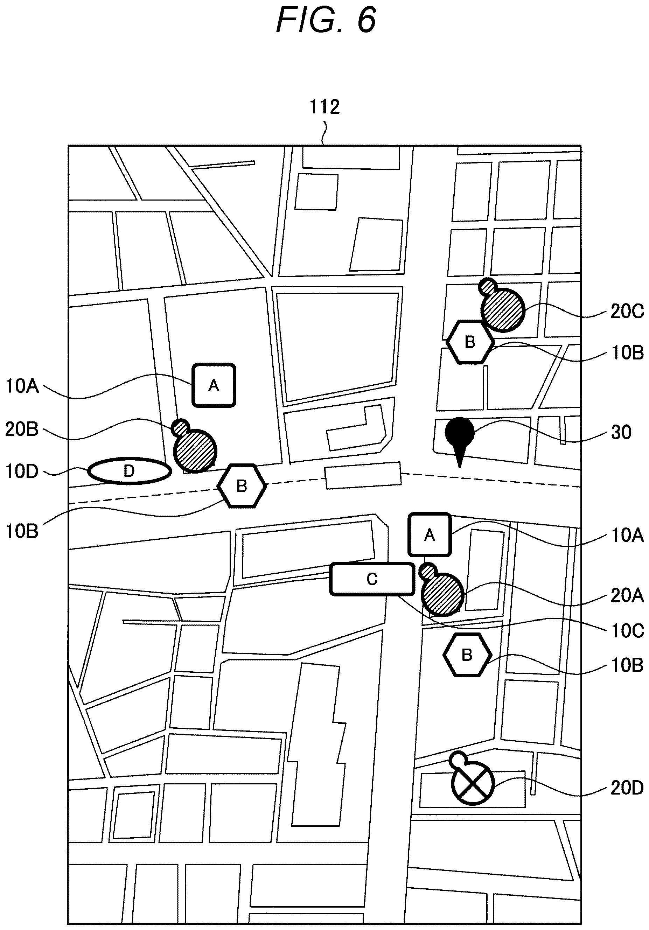

The server 200 transmits the map data generated as described above to the smartphone 100, and the smartphone 100 that has received the map data displays a map on the basis of the received map data. At this time, on the map displayed on the smartphone 100, a display indicating the types of a plurality of payment methods available at a predetermined place is displayed in association with the predetermined place, as will be described later with reference to Fig. 6.

According to the payment method display system of the present embodiment as described above, the user can recognize in advance the payment methods available at a predetermined place on the map. This allows the user to select a shop where a payment method that the user wants to use is available. Furthermore, according to the payment method display system of the present embodiment, the display indicating the types of the plurality of payment methods available at the predetermined place is displayed on the map, such that the user can easily select a shop where a payment method that the user wants to use is available.

### <2. Configuration of Apparatuses constituting Payment Method Display System>

The outline of the payment method display system according to the present embodiment has been described above. The configuration of each apparatus constituting the payment method display system of the present embodiment will be described below.

### (2-1. Functional Configuration of Smartphone 100)

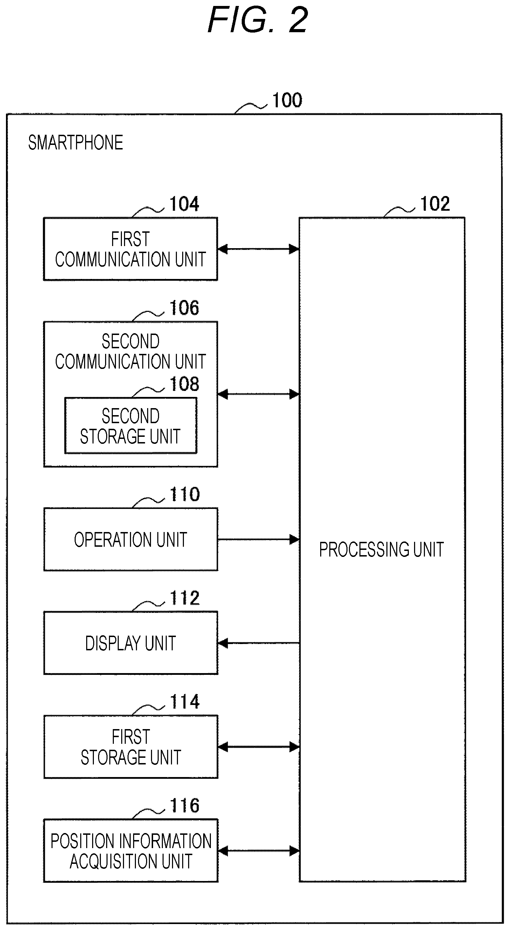

Fig. 2 is a block diagram illustrating an example of the configuration of the smartphone 100 capable of performing a process according to the information processing methods of the present embodiment. The smartphone 100 includes, for example, a processing unit 102, a first communication unit 104, a second communication unit 106, an operation unit 110, a display unit 112, a first storage unit 114, and a position information acquisition unit 116. Furthermore, the second communication unit 106 includes a second storage unit 108.

The processing unit 102 processes a signal from each component of the smartphone 100. For example, the processing unit 102 performs a decoding process on a signal sent from the first communication unit 104 or the second communication unit 106, and extracts data. Furthermore, the processing unit 102 may process a signal from the operation unit 110 to issue an instruction to an application executed in the processing unit 102. In addition, the processing unit 102 may read data from the first storage unit 114 or the second storage unit 108 to perform a process based on the read data.

The first communication unit 104 is a communication unit for connecting the smartphone 100 and an external network and may perform communication using a communication scheme prescribed by, for example, third generation partnership project (3GPP) or 3GPP2. The first communication unit 104 may perform communication using a communication scheme such as wideband code division multiple access (W-CDMA), long term evolution (LTE), or CDMA 2000. Note that the above-described communication schemes are an example and the communication scheme of the first communication unit 104 is not restricted to this example.

The second communication unit 106 is a communication unit that communicates with an external apparatus by near field wireless communication and may perform communication using, for example, near field communication (NFC). Furthermore, the second communication unit 106 may include the second storage unit 108 that stores information used for communication by the second communication unit 106. The second storage unit 108 may store, for example, information related to electronic money. The information related to electronic money may include unique identification information assigned to each user in each electronic money system, such as a Suica ID number and an Edy number, and may also include balance information regarding electronic money. The second storage unit 108 may also store, as information related to electronic money, information related to the user (for example, a user ID), and the date and time of use, the amount of use, and the like of electronic money. The second storage unit 108 may also store information related to a credit card. The information related to the credit card may include information related to the user (for example, a user ID), a credit card number, and the date and time of use, the amount of use, and the like of the credit card.

The operation unit 110 accepts an operation of the user with respect to the smartphone 100. The user operates the operation unit 110 to operate, for example, an application executed by the smartphone 100. Furthermore, the user operates the operation unit 110 to set various functions of the smartphone 100.

The display unit 112 is used to display an image. For example, the display unit 112 displays an image related to an application executed by the smartphone 100. The first storage unit 114 stores programs such as an application and an operating system executed by the smartphone 100.

The position information acquisition unit 116 acquires the position of the smartphone 100. The position information acquisition unit 116 may acquire the position of the smartphone 100 using, for example, a global navigation satellite system (GNSS). Furthermore, the position information acquisition unit 116 may acquire the position of the smartphone 100 on the basis of information from a base station of a cellular communication network.

### (2-2. Hardware Configuration of Smartphone 100)

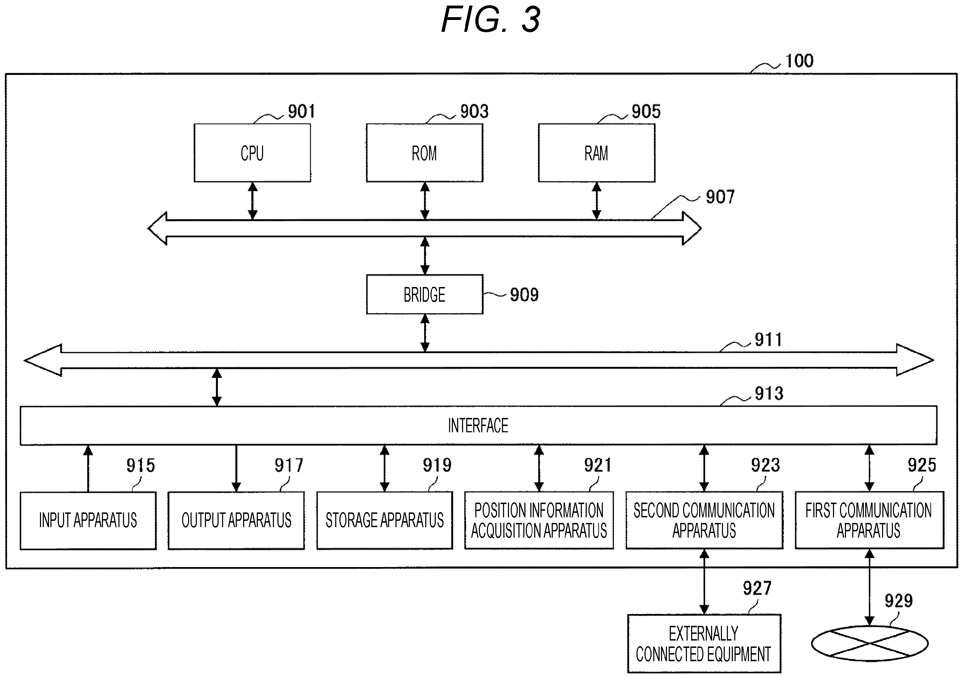

A hardware configuration of the smartphone 100 according to the embodiment of the present disclosure will be described below in detail with reference to Fig. 3. Fig. 3 is a block diagram for explaining a hardware configuration of the smartphone 100 according to the embodiment of the present disclosure.

The smartphone 100 mainly includes a CPU 901, a ROM 903 and a RAM 905. Moreover, the smartphone 100 further includes a host bus 907, a bridge 909, an external bus 911, an interface 913, an input apparatus 915, an output apparatus 917, a storage apparatus 919, a position information acquisition apparatus 921, a second communication apparatus 923, and a first communication apparatus 925.

The CPU 901 functions as central processing apparatus and control apparatus, and controls the overall action or a part of the action in the smartphone 100 in accordance with various programs recorded in the ROM 903, the RAM 905, the storage apparatus 919, or externally connected equipment 927. Note that the CPU 901 may have the function of the processing unit 102. The ROM 903 stores programs, calculation parameters, and the like used by the CPU 901. The RAM 905 primarily stores programs used by the CPU 901, parameters that appropriately vary in execution of the programs, and the like. These units are mutually connected by the host bus 907 configured from an internal bus such as a CPU bus.

The host bus 907 is connected to the external bus 911 such as a peripheral component interconnect/interface (PCI) bus via the bridge 909.

The input apparatus 915 is an operation means operated by the user, such as an electrostatic or pressure-sensitive touch panel, a button, a switch, and a jog dial. Moreover, the input apparatus 915 is configured from, for example, an input control circuit that generates an input signal on the basis of information input by the user using the above-mentioned operation means and outputs the generated input signal to the CPU 901. The user can input various types of data to the smartphone 100 or instruct the smartphone 100 on processing actions by operating this input apparatus 915. Note that the input apparatus 915 may have the function of the operation unit 110.

The output apparatus 917 is configured from an apparatus capable of visually or audibly notify the user of the acquired information. Examples of such an apparatus include a display apparatus such as a liquid crystal display apparatus, an electro luminescence (EL) display apparatus, and a lamp, or a sound output apparatus such as a speaker and a headphone. The output apparatus 917 outputs, for example, results obtained by various processes performed by the smartphone 100. Specifically, the display apparatus displays the results obtained by various processes performed by the smartphone 100 as text or an image. Meanwhile, the sound output apparatus converts an audio signal made up of reproduced sound data, acoustic data, or the like into an analog signal and outputs the converted analog signal. Note that the display apparatus of the output apparatus 917 may have the function of the display unit 112.

The storage apparatus 919 is an apparatus for keeping data used in the smartphone 100. The storage apparatus 919 is configured from, for example, a magnetic storing device such as a hard disk drive (HDD), a semiconductor storing device, an optical storing device, or a magneto-optical storing device. This storage apparatus 919 keeps programs and various types of data executed by the CPU 901, various types of data acquired from the outside, and the like. Note that the storage apparatus 919 may have the function of the first storage unit 114.

The position information acquisition apparatus 921 is incorporated in or externally attached to the smartphone 100. The position information acquisition apparatus is, for example, a global positioning system (GPS) receiver that receives a message from an artificial satellite orbiting the earth and performs triangulation using information included in the received message. Furthermore, the position information acquisition apparatus may be a receiver circuit that acquires the position information on the basis of position information transmitted from a base station of a cellular communication network. Here, the position information transmitted from the base station used for acquiring the position information regarding the smartphone 100 may be position information transmitted from one base station, or alternatively, may be position information transmitted from a plurality of base stations. In a case where position information transmitted from a plurality of base stations is used, the position information acquisition apparatus 921 may acquire the position information regarding the smartphone 100 using triangulation.

The second communication apparatus 923 is used to exchange data with the externally connected equipment 927 by establishing communication with the externally connected equipment 927. By being connected to the externally connected equipment 927 by this second communication apparatus 923, the smartphone 100 directly acquires various types of data from the externally connected equipment 927 or transmits various types of data to the externally connected equipment 927. Note that an example of the second communication apparatus 923 is an electronic circuit equipped with a noncontact integrated circuit (IC) chip. Furthermore, the second communication apparatus 923 may have a reader/writer function for NFC. In addition, at this time, the externally connected equipment 927 may be equipment that includes an IC card compatible with electronic money and communicates with the second communication apparatus 923 via the reader/writer function.

The first communication apparatus 925 is, for example, a communication interface configured from a communication device or the like for connecting to a communication network 929. The first communication apparatus 925 is, for example, a modem circuit that works in compliance with a standard prescribed by 3GPP. The communication scheme in compliance with the standard prescribed by 3GPP includes, for example, W-CDMA and LTE. The first communication apparatus 925 can transmit and receive signals and the like to and from, for example, the Internet or a network of a communication carrier in line with a predetermined protocol such as transmission control protocol/Internet protocol (TCP/IP). Furthermore, the communication network 929 connected to the first communication apparatus 925 is configured from a network connected wirelessly or the like, and may be, for example, the Internet or a network of a communication carrier.

### (2-3. Functional Configuration of Server 200)

The functional and hardware configurations of the smartphone 100 of the present embodiment have been described above. The functional and hardware configurations of the server 200 of the present embodiment will be described below.

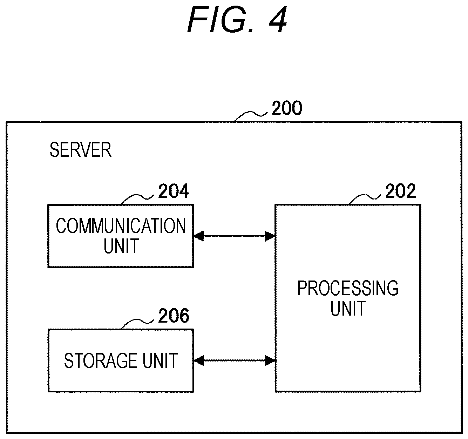

Fig. 4 is a block diagram illustrating an example of the configuration of the server 200 capable of performing a process according to the information processing methods of the present embodiment. The server 200 includes, for example, a processing unit 202, a communication unit 204, and a storage unit 206.

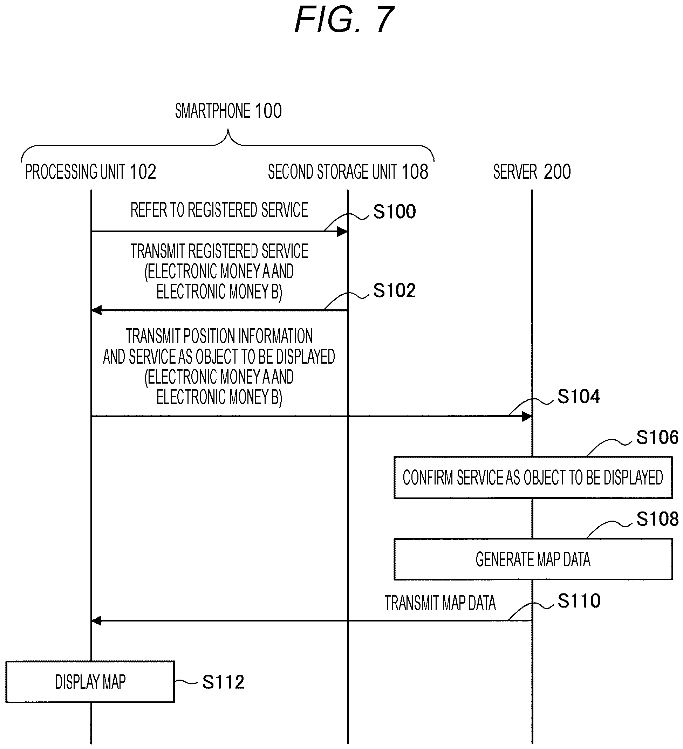

The processing unit 202 processes a signal from each component of the server 200. For example, the processing unit 202 performs a decoding process on a signal sent from the communication unit 204, and extracts data. Furthermore, the processing unit 202 reads data from the storage unit 206 to perform a process on the read data. Note that the processes of the server 200 illustrated in Figs. 7, 8, 9, 15, 18 and 19 described later are performed by the processing unit 202.

The communication unit 204 is a communication unit that communicates with an external apparatus by wired communication or wireless communication, and may perform communication using a communication scheme in compliance with, for example, Ethernet. The storage unit 206 keeps various types of data used by the processing unit 202. In the present embodiment, the storage unit 206 may store map data. Furthermore, the storage unit 206 may keep a database that associates a predetermined place on a map with the type of payment method available at the predetermined place.

### (2-4. Hardware Configuration of Server 200)

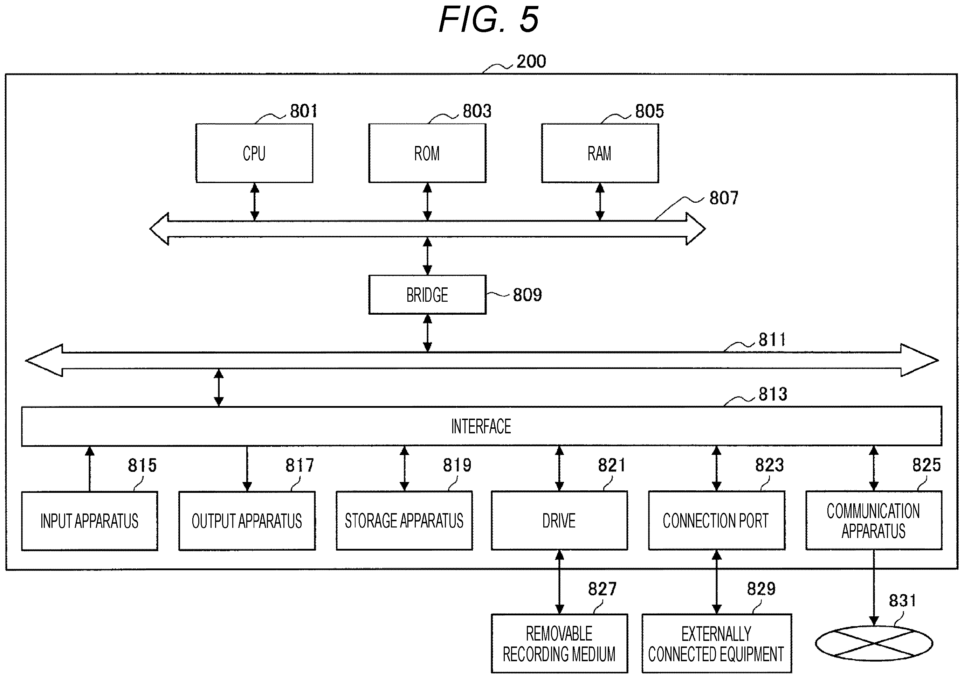

A hardware configuration of the server 200 according to the embodiment of the present disclosure will be described below in detail with reference to Fig. 5. Fig. 5 is a block diagram for explaining a hardware configuration of the server 200 according to the embodiment of the present disclosure.

The server 200 mainly includes a CPU 801, a ROM 803 and a RAM 805. Moreover, the server 200 further includes a host bus 807, a bridge 809, an external bus 811, an interface 813, an input apparatus 815, an output apparatus 817, a storage apparatus 819, a drive 821, a connection port 823, and a communication apparatus 825.

The CPU 801 functions as central processing apparatus and control apparatus, and controls the overall action or a part of the action in the server 200 in accordance with various programs recorded in the ROM 803, the RAM 805, the storage apparatus 819, or a removable recording medium 827. Note that the CPU 801 may have the function of the processing unit 202. The ROM 803 stores programs, calculation parameters, and the like used by the CPU 801. The RAM 805 primarily stores programs used by the CPU 801, parameters that appropriately vary in execution of the programs, and the like. These units are mutually connected by the host bus 807 configured from an internal bus such as a CPU bus.

The input apparatus 815 is an operation means operated by a server supervisor, such as a mouse, a keyboard, a touch panel, a button, a switch, and a lever. Furthermore, the input apparatus 815 is configured from, for example, an input control circuit that generates an input signal on the basis of information input by the server supervisor using the above-mentioned operation means and outputs the generated input signal to the CPU 801. The server supervisor can input various types of data to the server 200 or instruct the server 200 on processing actions by operating this input apparatus 815.

The output apparatus 817 is configured from an apparatus capable of visually or audibly notify the user of the acquired information. Examples of such an apparatus include a display apparatus such as a cathode ray tube (CRT) display apparatus, a liquid crystal display apparatus, a plasma display apparatus, an EL display apparatus, and a lamp, a sound output apparatus such as a speaker and a headphone, a printer apparatus, a mobile phone, and a facsimile. The output apparatus 817 outputs, for example, results obtained by various processes performed by the server 200. Specifically, the display apparatus displays the results obtained by various processes performed by the server 200 as text or an image. Meanwhile, the sound output apparatus converts an audio signal made up of reproduced sound data, acoustic data, or the like into an analog signal and outputs the converted analog signal.

The storage apparatus 819 is an apparatus for keeping data configured as an example of the storage unit 206 of the server 200. The storage apparatus 819 is configured from, for example, a magnetic storing device such as a hard disk drive (HDD), a semiconductor storing device, an optical storing device, or a magneto-optical storing device. This storage apparatus 819 keeps programs and various types of data executed by the CPU 801, various types of data acquired from the outside, and the like. Note that the storage apparatus 819 may have the function of the storage unit 206.

The drive 821 is a reader/writer for a recording medium, and is incorporated in or externally attached to the server 200. The drive 821 reads information recorded in the mounted removable recording medium 827 such as a magnetic disk, an optical disc, a magneto-optical disk, or a semiconductor memory, and outputs the read information to the RAM 805. Furthermore, the drive 821 can also write a record on the mounted removable recording medium 827 such as a magnetic disk, an optical disc, a magneto-optical disk, or a semiconductor memory. The removable recording medium 827 is, for example, a digital versatile disc (DVD) medium, a high definition (HD)-DVD medium, or a Blu-ray (registered trademark) medium. In addition, the removable recording medium 827 may be CompactFlash (registered trademark) (CF), a flash memory, a secure digital memory card (SD memory card), or the like. Meanwhile, the removable recording medium 827 may be, for example, an integrated circuit card (IC card) or a piece of electronic equipment equipped with a noncontact IC chip.

The connection port 823 is a port for directly connecting equipment to the server 200. Examples of the connection port 823 include a universal serial bus (USB) port, an Institute of Electrical and Electronic Engineers (IEEE) 1394 port, and a small computer system interface (SCSI) port. Other examples of the connection port 823 include a recommended standard (RS)-232C port, an optical audio terminal, and a high-definition multimedia interface (HDMI) (registered trademark) port. By connecting externally connected equipment 829 to this connection port 823, the server 200 directly acquires various types of data from the externally connected equipment 829 or provides various types of data to the externally connected equipment 829.

The communication apparatus 825 is, for example, a communication interface configured from a communication device or the like for connecting to a communication network 831. The communication apparatus 825 is, for example, a communication card for a wired or wireless local area network (LAN), or wireless USB (WUSB). Furthermore, the communication apparatus 825 may be a router for optical communication, a router for asymmetric digital subscriber line (ADSL), a modem for various communications, or the like. This communication apparatus 825 can transmit and receive signals and the like to and from, for example, the Internet or other communication equipment in line with a predetermined protocol such as TCP/IP. In addition, the communication network 831 connected to the communication apparatus 825 is configured from a network connected in a wired or wireless manner, or the like and may be, for example, the Internet, a home LAN, infrared communication, radio wave communication, or satellite communication.

### <3. Information Processing Methods in Payment Method Display System>

### (3-1. First Information Processing Method)

The configuration of each apparatus constituting the payment method display system of the present embodiment has been described above. The information processing methods in the payment method display system of the present embodiment will be described below. Note that, in the following, an example in which a display indicating the type of electronic money is displayed on a map will be described. However, a display indicating the type of credit card may be displayed on a map using a similar method.

Fig. 6 is a diagram illustrating a screen of a map displayed on the display unit 112 of the smartphone 100 on the basis of the map data generated by the server 200. In the present embodiment, a map as illustrated in Fig. 6 is displayed using an application or a browser configured to display a map on the smartphone 100. Note that, hereinafter, displays 10A, 10B, 10C, and 10D indicating the types of electronic money are sometimes collectively referred to as a display 10 indicating the types of electronic money. Furthermore, displays 20A, 20B, 20C, and 20D indicating shops are sometimes collectively referred to as a display 20 indicating shops.

In Fig. 6, the display 10 indicating the types of available electronic money is displayed for shops, which are examples of a predetermined place on the map. Here, the display 10 indicating the types of available electronic money is displayed in association with the shops. Specifically, the display 10 indicating the types of available electronic money is displayed around the display 20 indicating the shops.

In Fig. 6, the display 10A indicating that electronic money A is available is represented using a square display as the display 10 indicating the type of available electronic money. Furthermore, the display 10B indicating that electronic money B is available is represented using a hexagonal display. In addition, the display 10C indicating that electronic money C is available is represented using a rectangular display. Likewise, the display 10D indicating that electronic money D is available is represented using an oval display.

That is, the electronic money A, electronic money B, and electronic money C are available at a shop A indicated by the display 20A, the electronic money A, electronic money B, and electronic money D are available at a shop B indicated by the display 20B, and the electronic money B is available at a shop C indicated by the display 20C.

As described above, in the payment method display system of the present embodiment, the display 10 indicating the plurality of types of electronic money available at predetermined places is displayed on the map. This allows the user to easily recognize the types of electronic money available at predetermined places. In particular, a user who is not familiar with shops in an area where the user is currently located, such as a traveler, can easily recognize which type of electronic money is available at which shop, such that the use of electronic money is promoted. Furthermore, in the payment method display system of the present embodiment, the display 10 indicating the plurality of types of available electronic money is displayed on the map in different display modes for each type of electronic money. This allows the user to more easily recognize the types of available electronic money.

Moreover, as for the display 20 representing shops, the displays 20A, 20B, and 20C indicating that electronic money registered in the smartphone 100 of the user is available are displayed. Furthermore, the display 20D indicating that electronic money registered in the smartphone 100 of the user is not available is displayed. In this manner, in the payment method display system of the present embodiment, the display 20 representing the shops employs different display methods between a shop where electronic money registered in the smartphone 100 of the user is available (for example, the shops A, B, and C) and a shop where electronic money registered in the smartphone 100 of the user is not available (for example, the shop D). With this configuration, the user can easily distinguish between a shop where electronic money registered in the smartphone 100 of the user is available and a shop where electronic money registered in the smartphone 100 of the user is not available. Note that the display 20 representing the shops may have different display modes between a display indicating that the electronic money is available at the shop and a display indicating that the electronic money is not available at the shop.

Furthermore, the user may be allowed to refer to information regarding the shop by performing a predetermined operation such as tapping the display 20 representing the shop. Here, the information regarding the shop may include the shop name, shop opening hours, the shop phone number, the shop address, the shop e-mail address, shop product information, and the like. In addition, the information regarding the shop may include information regarding an advertisement of the shop.

Note that, in Fig. 6, a display 30 indicating the position of the smartphone 100 is displayed. The position information used to display this display 30 indicating the position of the smartphone 100 is acquired by the position information acquisition unit 116 included in the smartphone 100. For example, the position information may be acquired using GPS, or may be acquired on the basis of position information from a base station of a cellular communication network.

The display method used in the payment method display system of the present embodiment has been described above. An information processing method for displaying the screen illustrated in Fig. 6 will be described below. Fig. 7 is a diagram illustrating an example of the information processing method used in the payment method display system of the present embodiment.

Initially, in S100, the processing unit 102 of the smartphone 100 refers to the second storage unit 108 in order to recognize the type of electronic money registered in the smartphone 100. Here, the electronic money registered for use in the smartphone 100 may be, for example, electronic money available through NFC included in the smartphone 100. The electronic money may be registered for use in the smartphone 100, for example, by registering a unique identification number written on an electronic money card in an application. This unique identification number may be registered by reading information stored in a chip of the electronic money card by NFC, or may be registered by manual input by the user; alternatively, the unique identification number may be registered by an imaging apparatus of the smartphone 100 recognizing the identification number written on the electronic money card.

Next, in step S102, the second storage unit 108 of the smartphone 100 sends the type of electronic money registered for use to the processing unit 102. For example, in Fig. 7, the electronic money A and electronic money B are notified to the processing unit 102 as electronic money registered for use in the smartphone 100.

Next, in S104, the processing unit 102 of the smartphone 100 transmits, to the server 200, the position information acquired by the position information acquisition unit 116 and the type of electronic money as an object to be displayed. Here, the object to be displayed means the type of electronic money for which the display 10 indicating the type of electronic money is to be displayed on the map. Note that, in Fig. 7, since the types of electronic money registered for use in the smartphone 100 are the electronic money A and the electronic money B, the electronic money A and the electronic money B are transmitted to the server 200 as the types of electronic money as objects to be displayed.

In addition, the position information transmitted in S104 is not restricted to the position information acquired by the position information acquisition unit 116. For example, the position information transmitted in S104 may be information regarding a position specified by the user operating the operation unit 110. That is, the user may designate a specific place on the map by operating the operation unit 110 on the map displayed on the display unit 112. Then, the smartphone 100 may transmit the information regarding the position specified by the user in S104.

Next, in S106, the server 200 confirms the type of electronic money received from the smartphone 100 as an object to be displayed. In S106, the electronic money A and the electronic money B are recognized by the server 200 as electronic money as an object to be displayed.

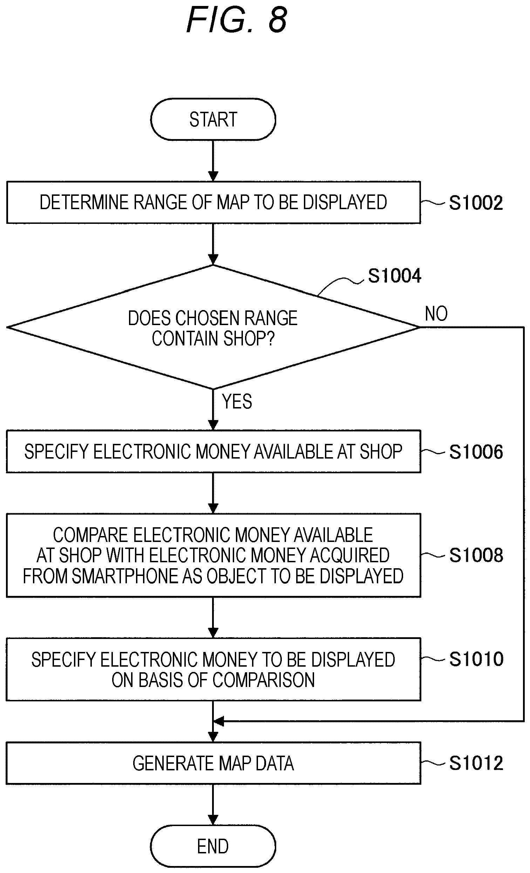

Next, in step S108, the server 200 generates map data on the basis of the information acquired from the smartphone 100. The details of the process performed in S108 will be described with reference to Fig. 8.

Fig. 8 is a diagram for explaining in detail an information process performed by the server 200 to generate the map data. In S1002, the server 200 fixes the range of the map to be displayed, on the basis of the position information received from the smartphone 100. Here, the range of the map to be displayed is chosen so as to include a position indicated by the position information received from the smartphone 100, and may be chosen on the basis of a preset scale.

Next, in S1004, the server 200 determines whether or not the chosen range contains information indicating a shop. Then, in a case where the chosen range contains a shop, the server 200 refers to a database stored in the storage unit 206 in S1006. Here, in the database, a shop may be stored in linkage with the type of electronic money available at the shop. Then, the server 200 specifies a shop and the type of electronic money available at the shop by referring to the database. Note that, in a case where the range chosen in S1004 does not contain information indicating a shop, the process proceeds to S1012. In addition, in order to be used for determination in S1004 and S1006, as mentioned above, the server 200 may be supplied in advance with information for identifying the location of a shop and whether or not electronic money is available from each electronic money business operator or the like, and store the supplied information in the storage unit 206. Furthermore, in a case where the range chosen in S1004 does not contain information indicating a shop, the server 200 may expand the range of the map to be displayed until a shop is found. This enlarged range may be set in advance by the user, and the user may be allowed to preset the upper limit of the range of the map to be enlarged. By such a process, the user can easily find a shop where the electronic money is available.

Next, in S1008, the server 200 compares the type of electronic money available at the shop specified in S1006 with the type of electronic money received from the smartphone 100 in S104 as an object to be displayed. Here, for example, in a case where the types of electronic money available at the shop specified in S1008 are the electronic money A, electronic money B and electronic money C, and the types of electronic money as objects to be displayed, which have been received from the smartphone 100, are the electronic money A and electronic money B, the server 200 determines that the types of electronic money to be displayed on the map are the electronic money A, electronic money B, and electronic money C.

Here, the reason why the electronic money C, which is not included in the types of electronic money as objects to be displayed, which have been received from the smartphone 100, is determined by the server 200 as an object to be displayed is to promote the use of the electronic money C. The method of choosing the types of electronic money to be displayed on the map by the server 200 described above corresponds to the method of choosing the types of electronic money (the electronic money A, electronic money B, and electronic money C) to be displayed in association with the display 20A indicating the shop A in Fig. 6.

Furthermore, in a case where the type of electronic money available at the shop specified in S1008 is the electronic money B, and the types of electronic money as objects to be displayed, which have been received from the smartphone 100, are the electronic money A and electronic money B, the server 200 may determine the type of electronic money to be displayed, as the electronic money B. This method of choosing the type of electronic money to be displayed on the map by the server 200 corresponds to the method of choosing the type of electronic money (electronic money B) to be displayed in association with the shop C in Fig. 6.

That is, in a case where at least one type of electronic money received from the smartphone 100 as an object to be displayed is included in the types of electronic money available at the shop, the server 200 may determine all types of electronic money available at the shop, as the types of electronic money as objects to be displayed on the map. With this determination method, whether or not electronic money other than the type of electronic money registered for use in the smartphone 100 is available is recognized by the user. Therefore, the user can recognize which type of electronic money is easy to use.

Note that, as a matter of course, in a case where the types of electronic money available at the shop are the electronic money A, electronic money B and electronic money C, and the types of electronic money as objects to be displayed, which have been received from the smartphone 100, are the electronic money A and electronic money B, the server 200 may determine the types of electronic money to be displayed on the map as the electronic money A and electronic money B in S1008. That is, the server 200 may specify the type of electronic money as an object to be displayed on the map so as not to display a type of electronic money other than the type of electronic money received from the smartphone 100 as an object to be displayed. This allows the user to easily recognize a shop where electronic money registered for use by the user is available.

Then, in step S1012, the server 200 generates map data on the basis of the processes performed in steps S1010 and S1004. Specifically, in a case where the range chosen in S1004 contains a shop, the server 200 generates map data so as to display the display 10 indicating the type of electronic money specified in S1010 in association with the display 20 indicating the shop. In a case where the range chosen in S1004 contains no shop, the server 200 generates map data of the range chosen in S1002. At this time, the generated map data does not include the display 20 representing a shop.

Returning to the explanation of Fig. 7, in S110, the server 200 transmits the map data generated in S108 to the smartphone 100. Then, in S112, the smartphone 100 displays a map on the basis of the map data received in S110. With this process, the screen as illustrated in Fig. 6 is displayed on the display unit 112 of the smartphone 100.

Note that, in the example described above, the process related to the type of electronic money registered for use in the smartphone 100 has been described. However, the second storage unit 108 of the smartphone 100 may store a type of electronic money owned by the user but not registered for use in the smartphone 100. Then, in S100, the processing unit 102 of the smartphone 100 refers to the second storage unit 108 in order to acquire information regarding the stored electronic money. Thereafter, in step S102, the second storage unit 108 sends the stored type of electronic money to the processing unit 102. The following processes may be performed similarly to the processes described above. Furthermore, although the above-described example is an example related to the electronic money, an information processing method that displays a display indicating the type of credit card may be performed using a similar method. Specifically, the second storage unit 108 of the smartphone 100 may store information regarding a credit card registered for use or owned by the user.

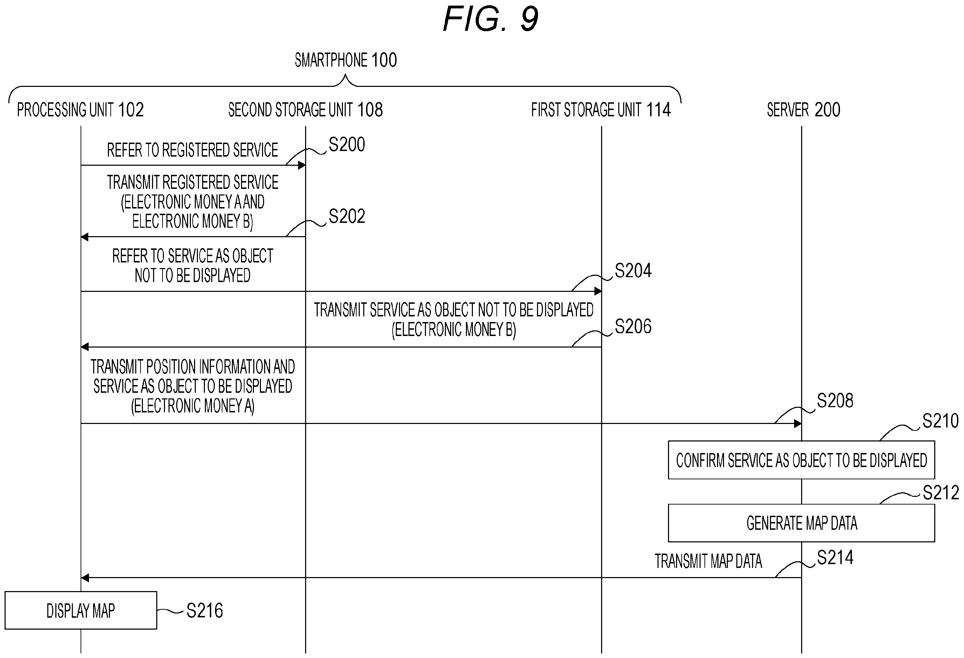

The information processing method has been described above in regard to an example in which, in a case where the electronic money available on the smartphone 100 is registered, the display 10 indicating the type of electronic money available at a shop is displayed on the map on the basis of the type of the registered electronic money. Note that, in the information processing method described above, the user may further be allowed to set the type of electronic money as an object not to be displayed. Fig. 9 is a diagram illustrating an example of an information processing method in a case where the user is allowed to set the type of electronic money as an object not to be displayed.

Note that, in Fig. 9, S200 to S202 and S210 to S216 correspond to S100 to S102 and S106 to S112 in Fig. 7, respectively, and thus will not be described in detail.

In S204, the processing unit 102 of the smartphone 100 refers to the first storage unit 114 in order to specify the type of electronic money set as an object not to be displayed, by the user. The first storage unit 114 stores the type of electronic money preset not to be displayed, by the user. For example, in Fig. 9, the electronic money B is set as the type of electronic money not to be displayed.

Therefore, in S206, the first storage unit 114 sends, to the processing unit 102, the fact that the electronic money B is set as the type of electronic money not to be displayed. Then, in S208, the smartphone 100 transmits the electronic money A to the server 200 as electronic money as an object to be displayed. This is because, although the electronic money A and electronic money B are registered for use, the electronic money B is set as an object not to be displayed, by the user. In the subsequent processes in S210 to S216, the processes are performed on the assumption that the object to be displayed on the map is the electronic money A.

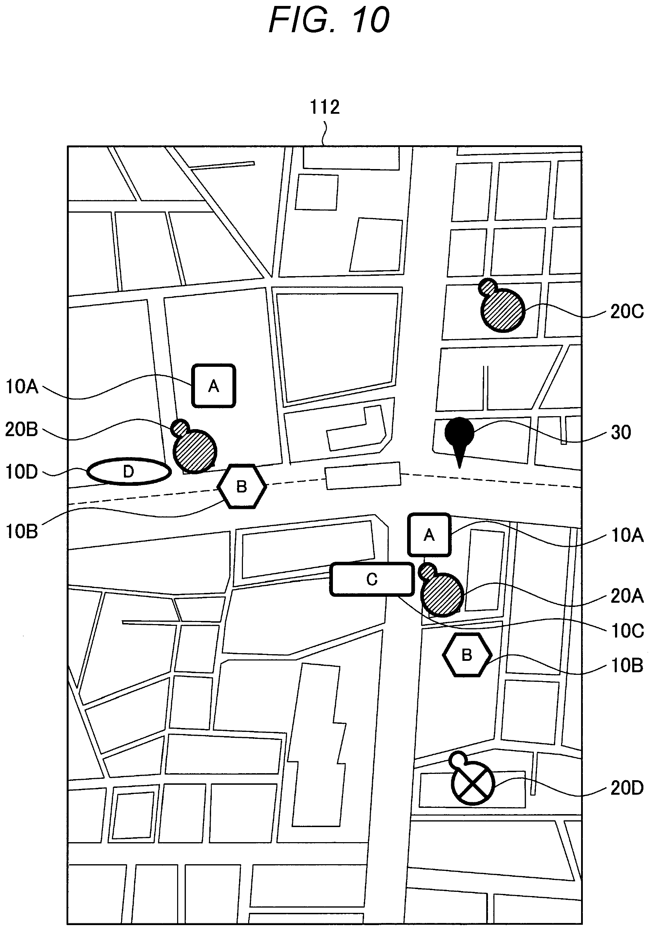

Fig. 10 is a diagram illustrating a screen of a map displayed on the display unit 112 of the smartphone 100 in a case where the information process according to Fig. 9 is performed. When Fig. 6 is compared with Fig. 10, the display 10B indicating the electronic money B, which has been displayed in Fig. 6 in association with the display 20C indicating the shop C, is not displayed in Fig. 10. This is because electronic money other than the electronic money B is not available at the shop C and accordingly the electronic money A as an object to be displayed is not available at the shop C. However, the display 20C indicating the shop C is expressed as a display indicating that the electronic money is available, similarly to the display 20A indicating the shop A and the display 20B indicating the shop B. This allows the user to recognize that some electronic money is available at the shop C.

Note that the display 10B indicating the electronic money B, which is an object not to be displayed, is displayed at the shops A and B. This is because the electronic money A as an object to be displayed is available at the shops A and B and as a consequence, the electronic money B is displayed. This promotes the use of the electronic money B. However, as a matter of course, the display 10B indicating the electronic money B, which is an object not to be displayed, does not have to be displayed at the shops A and B.

As described above, in the payment method display system of the present embodiment, the display 10 indicating the type of electronic money available at a shop is displayed in association with the display 20 indicating the shop. In this manner, by displaying the display 10 indicating the type of electronic money available at the shop, the user can easily recognize the electronic money available at the shop. However, since a lot of information is displayed densely on the map in an urban area, it is assumed that the display becomes complicated, causing a difficulty in recognizing which display 10 indicating the type of electronic money is associated with which shop.

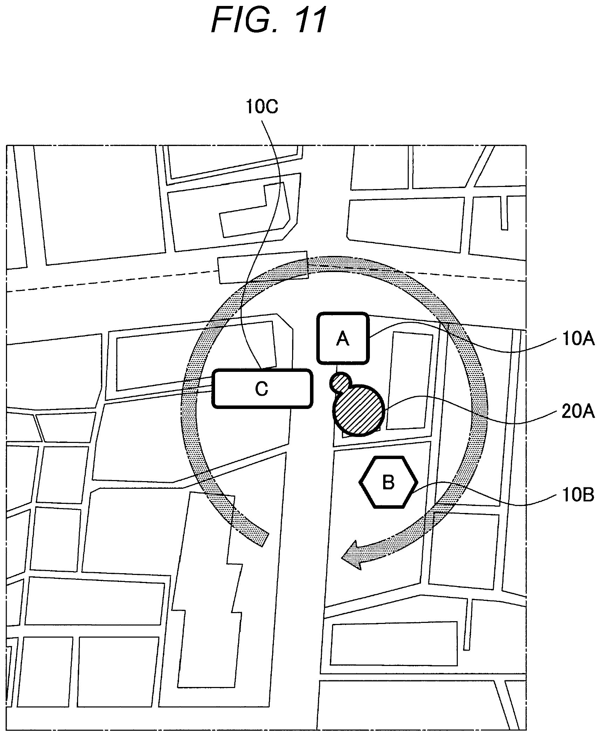

Accordingly, in the payment method display system of the present embodiment, the display 10 indicating the type of electronic money may be simply displayed. Fig. 11 is a diagram illustrating an example of an operation performed by the user in order to simply display the display 10 indicating the type of electronic money.

For example, in a case where the operation unit 110 is a touch panel, the display 10 indicating the type of money may be simply displayed when the user slides the finger on the display unit 112 so as to surround the display 10 indicating the type of electronic money being displayed, as illustrated in Fig. 11.

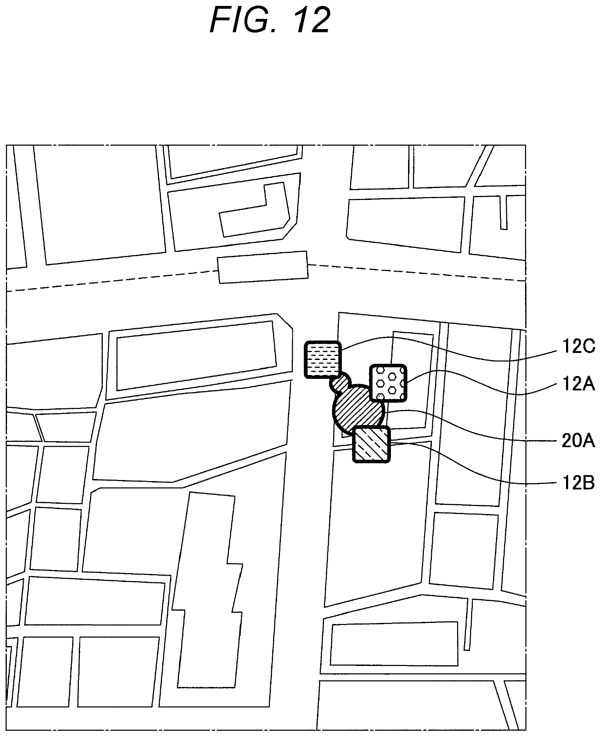

Fig. 12 is a diagram illustrating an example in which the display 10 indicating the types of electronic money is simply displayed by the operation illustrated in Fig. 11. At this time, as illustrated in Fig. 12, simplified displays 12A, 12B and 12C indicating the types of electronic money may be displayed so as to be superimposed on a part of the display 20 indicating a shop.

Furthermore, the simplified display 12 indicating the types of electronic money may be displayed in different colors or may be displayed in different shapes according to each type of electronic money. In addition, the simplified display 12 indicating the types of electronic money may be displayed at the same positions as the positions of the display 10 indicating the types of electronic money before being simply displayed, with respect to the display 20 indicating a shop.

That is, the simplified display 12A indicating the electronic money A may be displayed on the upper right with respect to the display 20 indicating the shop, similarly to the display 10A indicating the electronic money A before being simply displayed. Furthermore, the simplified display 12B indicating the electronic money B may be displayed on the lower right with respect to the display 20 indicating the shop, similarly to the display 10B indicating the electronic money B before being simply displayed. In addition, the simplified display 12C indicating the electronic money C may be displayed on the upper left with respect to the display 20 indicating the shop, similarly to the display 10C indicating the electronic money C before being simply displayed.

As described above, by displaying the simplified display 12 indicating the types of electronic money, the user can more easily recognize the electronic money available at the shop.

### (3-2. Second Information Processing Method)

The first information processing method in the payment information display system of the present embodiment has been described above. A second information processing method in the payment information display system of the present embodiment will be described below. In the second information processing method, an example will be described in which a benefit for a payment by electronic money is granted on the basis of the use of electronic money.

In the electronic money, a benefit is sometimes granted by an electronic money administration company. For example, in a case where a payment of a predetermined amount or more is made using predetermined electronic money, sometimes a point that can be exchanged for the electronic money is granted as a benefit, or performing an event for collecting a point such as a lottery is allowed.

Such benefits are provided to promote the use of electronic money. Therefore, when the display regarding such benefits is displayed on the map as a display relevant to the electronic money, the user can easily recognize the type of the electronic money from which the benefit can be obtained. With such a display, the use of the electronic money by which a benefit is granted is promoted to the user. Note that the above-mentioned benefits include a benefit that asks for registration of participation in the benefit in advance before the use of electronic money, and the user may register participation in the benefit beforehand by a predetermined operation.

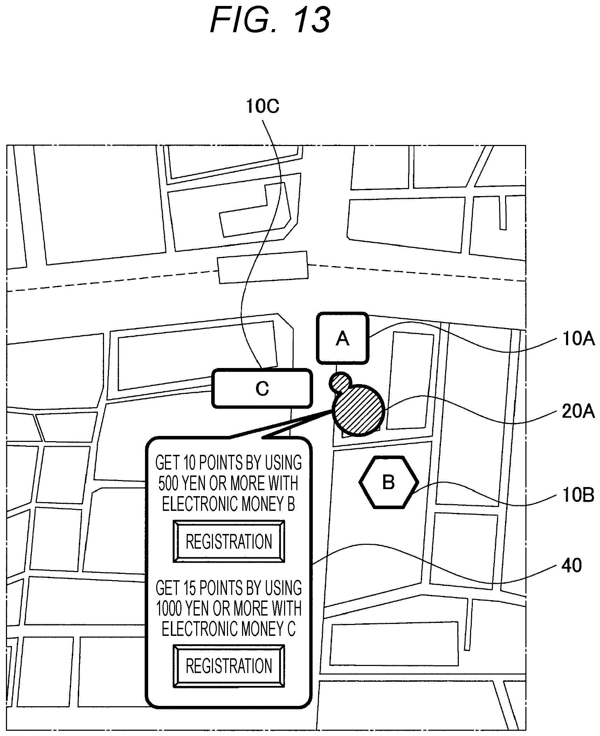

Fig. 13 is a diagram illustrating an example in which a display 40 indicating the contents of a benefit is displayed as a display relevant to electronic money. The display 40 indicating the contents of the benefit illustrated in Fig. 13 includes information indicating that "benefit of 10 points will be granted by using 500 yen or more with electronic money B". In addition, a registration button for prompting registration to the benefit is provided in the display 40 indicating the contents of the benefit.

Furthermore, the display 40 indicating the contents of the benefit illustrated in Fig. 13 includes information indicating that "benefit of 15 points will be granted by using 1,000 yen or more with electronic money C". In addition, a registration button for prompting registration to the benefit is provided in the display 40 indicating the contents of the benefit. The user can be registered for the benefit by tapping the registration button provided in the display 40 indicating the contents of the benefit. Then, the user can receive the benefit by performing use of the electronic money satisfying the condition for obtaining the benefit after being registered for the benefit.

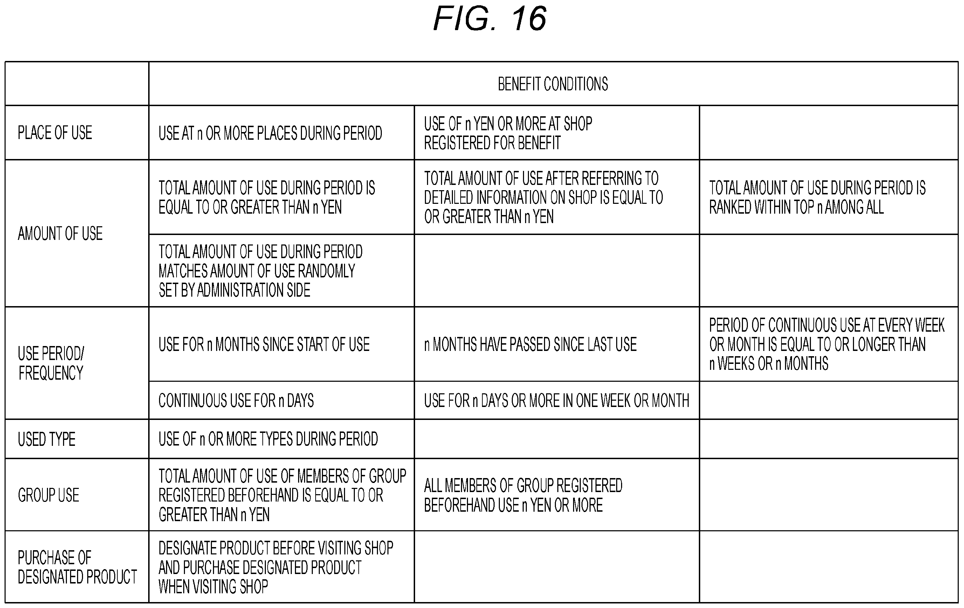

Note that the benefit illustrated in Fig. 13 may be granted in a case where use of electronic money satisfying the condition indicated in the display 40 indicating the contents of the benefit is performed at the shop A indicated by the display 20A. Furthermore, regardless of the shop to be used, the benefit may be granted in a case where use of electronic money satisfying the condition indicated in the display 40 indicating the contents of the benefit is merely performed. The conditions of the benefits will be detailed in Fig. 16.

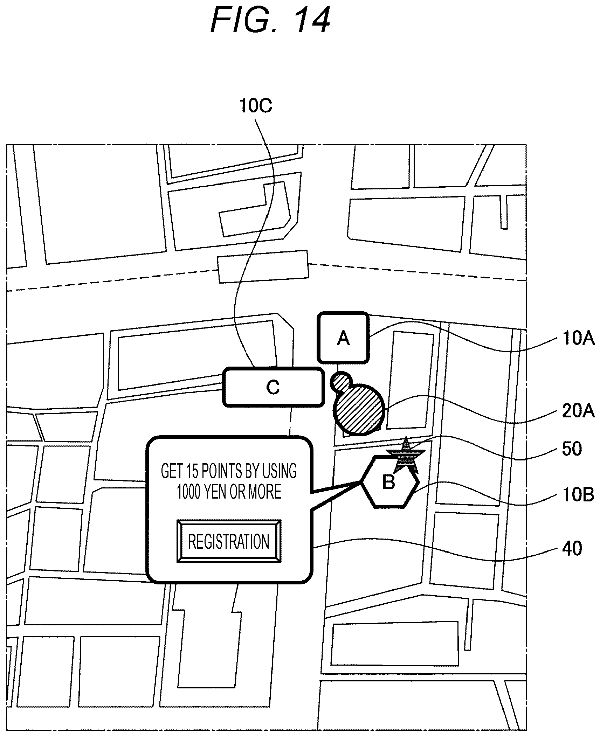

Note that, since a lot of information is densely displayed on the map in an urban area, it is difficult to display the display 40 indicating the contents of the benefit as illustrated in Fig. 13. Therefore, as illustrated in Fig. 14, a display 50 indicating that there is a benefit related to the electronic money B may be displayed on the initially displayed screen so as to be superimposed on the display 10B indicating the electronic money B. Then, when the user taps the display 50 indicating that there is a benefit related to the electronic money B or the display 10B indicating the electronic money B, the display 40 indicating the contents of the benefit may be displayed. With this display method, the user can easily recognize that there is a benefit regarding the electronic money, and each display indicating information is displayed so as to be easily recognized by the user.

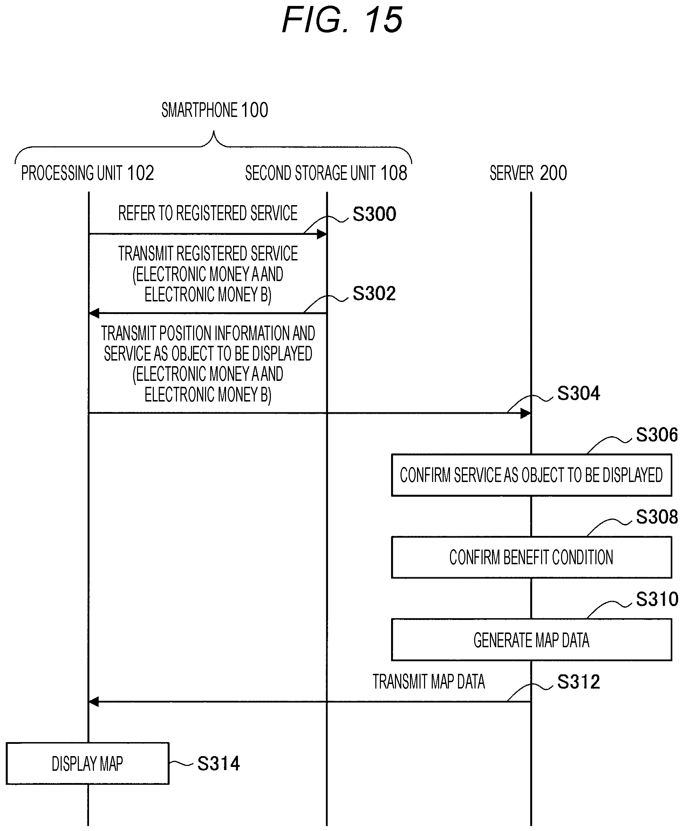

Fig. 15 is a diagram illustrating an example of an information processing method for displaying the display 40 indicating the contents of the benefit and the display 50 indicating that there is a benefit related to electronic money described above. Note that, in Fig. 15, S300 to S306 and S312 to S314 correspond to S100 to S106 and S110 to S112 in Fig. 7, respectively, and thus will not be described in detail.

When the type of electronic money as an object to be displayed, which is acquired from the smartphone 100, is determined in S306, next, in S308, the server 200 confirms a benefit condition set for the electronic money. At this time, in the server 200, a database in which a type of electronic money is linked with the condition of the benefit for the type of electronic money may be stored in the storage unit 206. Then, the server 200 may confirm the benefit condition for the type of electronic money by referring to the database.

Note that the type of electronic money whose benefit condition is confirmed in S308 may be the type of electronic money acquired from the smartphone 100 in S304 as an object to be displayed, or may be all types of electronic money. Furthermore, the benefit condition confirmed in S308 will be described later with reference to Fig. 16.

Then, in S310, the server 200 generates map data such that information regarding the benefit for the electronic money confirmed in S308 is displayed on the map in association with the display 20 indicating a shop or the display 10 indicating the type of electronic money available at the shop. Here, the information regarding the benefit for the electronic money is the display 40 indicating the contents of the benefit or the display 50 indicating that there is a benefit described in Figs. 13 and 14.

An example of the information processing method for displaying the display 40 indicating the contents of the benefit and the display 50 indicating that there is a benefit related to electronic money has been described above. Next, an example of the condition of the benefit confirmed by the server 200 in S308 of Fig. 15 will be described.

Fig. 16 is a diagram illustrating an example of the conditions of the benefits confirmed by the server 200 in S308 of Fig. 15. For example, the condition of the benefit may be set on the basis of a plurality of conditions such as "place of use", "amount of use", "use period/use frequency", "used type", "group use", and "purchase of designated product". Note that the benefit conditions described below may be conditions related to one type of electronic money, or may be conditions related to a combination of a plurality of types of electronic money.

Furthermore, the benefit condition related to "place of use" may be a condition that the user uses a predetermined type or a plurality of types of electronic money at n or more shops (n is a preset natural number) during a predetermined period. Specifically, the benefit condition may be a condition that the user uses the electronic money A at n or more shops during the period.

In addition, the benefit condition may be a condition that the user uses the electronic money A and/or the electronic money B at n or more shops during a predetermined period. That is, if the user uses any one type of the electronic money A or the electronic money B at n or more shops during the period, a benefit may be granted. Alternatively, in a case where the user uses both of the electronic money A and the electronic money B at n or more shops during a predetermined period, a benefit may be granted. Note that the types of electronic money required to be used and the shops at which the use of electronic money is required, which are included in the benefit conditions, may be designated in advance by, for example, a benefit administration operator. This promotes the use of specific electronic money and the use of electronic money at a specific shop.

Similarly, the benefit condition related to "place of use" may be a condition that the user uses n yen or more of a predetermined type or a plurality of types of electronic money at a shop registered for the benefit in advance, during a predetermined period. Here, as described in Fig. 13, the registration for the benefit means that the user registers participation in the benefit in advance.

Next, the benefit condition related to "amount of use" may be a condition that the total amount of a predetermined type or a plurality of types of electronic money used by the user during a predetermined period is equal to or greater than n yen.

Furthermore, the benefit condition related to "amount of use" may be a condition that the total amount of a predetermined type or a plurality of types of electronic money used by the user at a shop during a predetermined period after the user refers to information regarding the shop is equal to or greater than n yen. Here, the user may refer to the information regarding the shop by, for example, referring to information regarding the shop by tapping the display 20 representing the shop as described with reference to Fig. 6.

In addition, the benefit condition related to "amount of use" may be a condition that the total amount of a predetermined type or a plurality of types of electronic money used by the user during a predetermined period is ranked at a predetermined place or higher in the order of amounts of use of persons who have used the predetermined type or the plurality of types of electronic money during the predetermined period. Alternatively, the benefit condition related to "amount of use" may be a condition that the total amount of a predetermined type or a plurality of types of electronic money used by the user during a predetermined period matches an amount of use randomly set.

Next, the benefit condition related to "use period/use frequency" may be a condition that a predetermined period (for example, n months) has passed since the user started using a predetermined type of electronic money. Furthermore, the benefit condition related to "use period/use frequency" may be a condition that a predetermined period (for example, n months) has passed since the user last used a predetermined type of electronic money.

In addition, the benefit condition related to "use period/use frequency" may be a condition that the user uses a predetermined type or a plurality of types of electronic money continuously (for example, for n weeks or n months) at a predetermined period (for example, every one week or one month).

Alternatively, the benefit condition related to "use period/use frequency" may be a condition that the user uses a predetermined type or a plurality of types of electronic money continuously for a predetermined number of days (for example, n days).

In addition, the benefit condition related to "use period/use frequency" may be a condition that the user uses a predetermined type or a plurality of types of electronic money for n days or more during a predetermined period (for example, one week or one month).

Next, the benefit condition related to "used type" may be a condition that the user uses n or more types of electronic money during a predetermined period.

Next, in the benefit condition related to "group use", a group for receiving a benefit is preset. Here, the group to be preset may be a group including any user as a member and, for example, the group may be a family or a company. However, the attributes of the group or the attributes of the user belonging to the group are not restricted to these examples.

Then, the benefit condition related to "group use" may be a condition that the total amount of use of a predetermined type or a plurality of types of electronic money of members (users) belonging to a group registered beforehand during a predetermined period is equal to or greater than n yen.

Furthermore, the benefit condition related to "group use" may be a condition that all members belonging to a group registered beforehand use n yen or more of a predetermined type or a plurality of types of electronic money during a predetermined period. By setting the group in advance as described above, in a case where members in the group use different types of electronic money, the use of the plurality of different types of electronic money is promoted.

Next, the benefit condition related to "purchase of designated product" may be a condition that the user purchases a product designated beforehand, using electronic money. The product designated beforehand may be designated by an administration entity that grants the benefit, or may be designated in advance by a shop. At this time, the type of electronic money to be used to purchase the product may also be designated. Note that, in order to determine the above-mentioned benefit condition, information regarding the purchased product or service, the type of electronic money used for the purchase, information regarding the user who has made the purchase, and the like may be acquired from point of sale (POS) data.

An example of the benefit conditions set in the present embodiment has been described above. An example in which the balance of electronic money is displayed as information regarding the electronic money will be described below. Generally, the balance of the electronic money registered in the smartphone 100 is stored in the smartphone 100. In the present embodiment, the balance of the electronic money is stored in the second storage unit 108 of the second communication unit 106. However, the balance of the electronic money may be stored in any apparatus and is not restricted to the example described above.

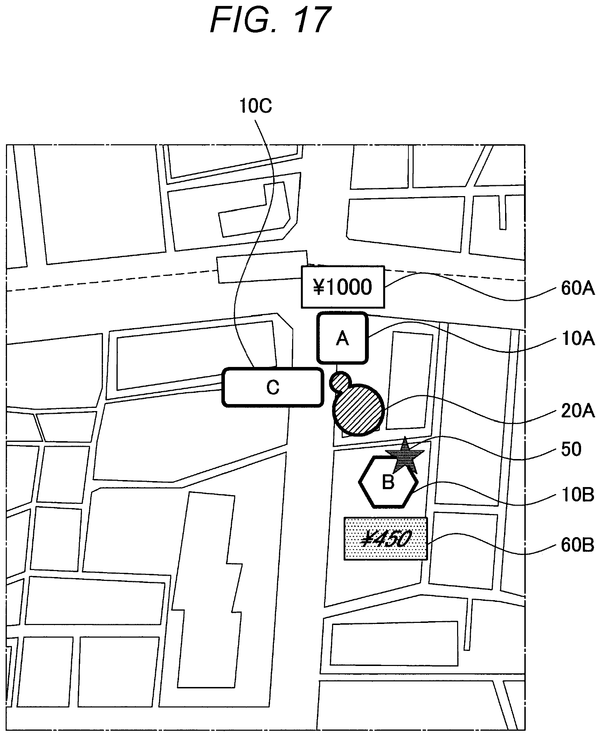

Fig. 17 is a diagram illustrating an example in which a display 60 indicating the balance of the electronic money is displayed as described above. In the example illustrated in Fig. 17, the electronic money A and the electronic money B are registered for use in the smartphone 100.

Accordingly, in Fig. 17, a balance display 60A indicating that the balance of the electronic money A is 1,000 yen and a balance display 60B indicating that the balance of the electronic money B is 450 yen are displayed under the displays 10A and 10B indicating the types of electronic money. Note that the electronic money C is not registered for use in the smartphone 100, such that the balance is not displayed.

In addition, in Fig. 17, the display mode of the display 60B indicating the balance related to the electronic money B is different from the display mode of the display 60A indicating the balance related to the electronic money A. This indicates that the balance of the electronic money B is insufficient with respect to the condition for obtaining the benefit related to the electronic money B.

For example, as illustrated in Fig. 14, in a case where the contents of the benefit condition related to the electronic money B is "15 points will be granted by using 1,000 yen or more with electronic money B", the balance of the electronic money B is 450 yen and thus the balance of the electronic money B is insufficient with respect to the amount according to the benefit condition. Accordingly, in the display mode of the display 60B indicating the balance related to the electronic money B, the display is presented differently from the display in the display mode of the display 60A indicating the balance related to the electronic money A, as illustrated in Fig. 17.

Note that the display mode of the display 60 indicating the balance, which indicates that the balance of the electronic money is insufficient with respect to the amount according to the benefit condition, may be changed, for example, by changing the color of the characters of the displayed balance. Furthermore, the display mode of the display 60 indicating the balance may be changed by displaying the characters of the displayed balance in italics. In addition, the display mode of the display 60 indicating the balance may be changed by changing the background of the display 60 indicating the balance. Alternatively, the display mode of the display 60 indicating the balance may be changed by changing the shape of the display 60 indicating the balance.

Additionally, a display for charging the electronic money may be presented by the user performing a predetermined operation on the display 60 indicating the balance of the electronic money. Specifically, the display for charging the electronic money may be presented in such a manner that the user performs a predetermined operation such as tapping the display 60 indicating the balance of the electronic money and then an application such as a browser is activated.

Note that the display for charging the electronic money may be presented when the user taps the display 60 indicating the balance of the electronic money whose display mode has been changed. With this configuration, the user can easily charge electronic money whose balance is insufficient with respect to the amount according to the benefit condition.

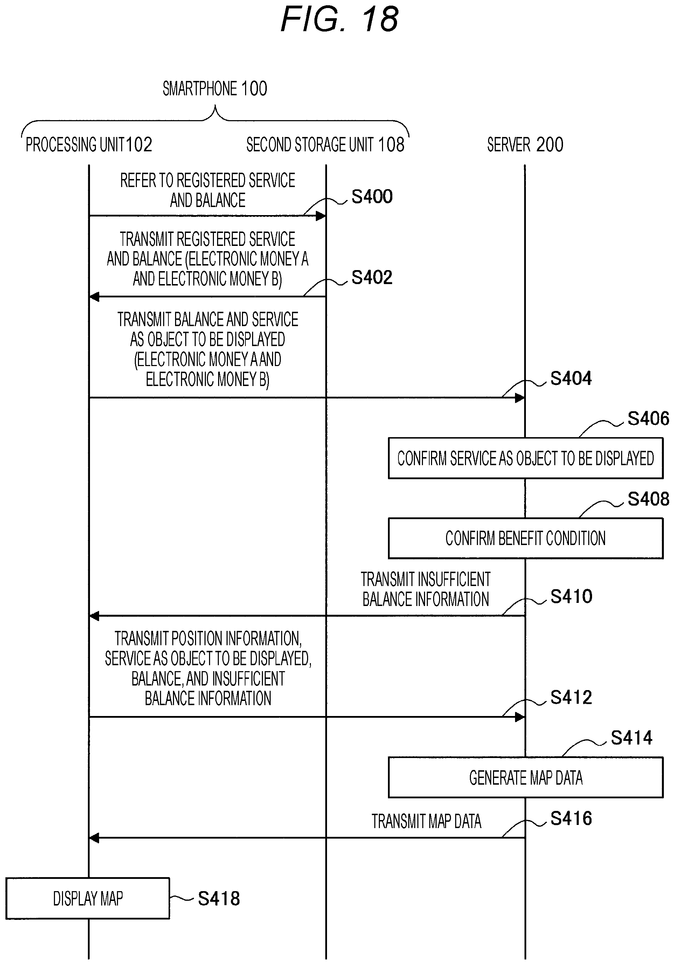

Fig. 18 is a diagram illustrating an example of an information processing method for presenting the display 60 indicating the balance of the electronic money described above. Note that, in Fig. 18, processes changed from or added to the information processing method in Fig. 7 in order to display the balance of the electronic money will be described. Accordingly, in S400 to S418, respective processes corresponding to S300 to S314 of Fig. 15 are performed except the processes described below.

Initially, in step S400, the processing unit 102 of the smartphone 100 refers to the second storage unit 108 in order to recognize the type and balance of electronic money registered in the smartphone 100. Next, in step S402, the second storage unit 108 of the smartphone 100 sends the type and balance of registered electronic money to the processing unit 102. For example, in Fig. 18, the electronic money A and electronic money B may be notified to the processing unit 102 as electronic money registered for use in the smartphone 100.

Next, in step S404, the processing unit 102 of the smartphone 100 transmits, to the server 200, information regarding the type and balance of electronic money as objects to be displayed. Here, since the types of electronic money registered for use are the electronic money A and electronic money B in S402, the electronic money A and electronic money B are transmitted to the server 200 as electronic money as objects to be displayed, and the balances of the electronic money A and electronic money B are also transmitted to the server 200.

Next, in S406, the server 200 confirms the electronic money received from the smartphone 100 as an object to be displayed. Next, in S408, the server 200 compares a benefit condition set for the electronic money with the balance acquired from the smartphone 100. Then, in a case where the balance acquired from the smartphone 100 does not reach the amount according to the benefit condition set for the electronic money, the server 200 generates information indicating that the balance of the electronic money is insufficient. Here, the server 200 determines which type of electronic money has a balance insufficient with respect to the benefit condition, and generates information indicating that the balance of the electronic money is insufficient, for each type of electronic money.

Then, in S410, the server 200 transmits, to the smartphone 100, the information indicating which type of electronic money has a balance insufficient with respect to the amount according to the benefit condition set for the electronic money, which has been generated in S408.

Next, in step S412, the smartphone 100 transmits, to the server 200, the position information, the type of electronic money as an object to be displayed, the balance of the electronic money, and the information indicating which type of electronic money has a balance insufficient with respect to the amount according to the benefit condition.

In S414, the server 200 generates map data such that the display 10 indicating the type of electronic money available at a shop, the display 20 indicating the shop, the display 40 indicating the contents of the benefit or the display 50 indicating that there is a benefit, and the display 60 indicating the balance are displayed on the map. Furthermore, the server 200 generates map data such that a display for charging the electronic money is presented by the user performing a predetermined operation on the display 60 indicating the balance of the electronic money. Here, in regard to the display 60 indicating the balance, the map data is generated on the basis of the information indicating that the balance of the electronic money is insufficient, which has been worked out in S408. That is, in a case where the balance of the electronic money is insufficient, the display mode of the display 60 indicating the balance may be changed as described above.

Then, in S416, the server 200 transmits the map data generated in S414 to the smartphone 100. In S418, the smartphone 100 displays a map on the basis of the map data received in S416.

As described above, the display 60 indicating the balance of the electronic money is displayed on the map, such that the user can easily recognize the balance of the electronic money in the smartphone 100. Furthermore, in a case where the balance in the smartphone 100 does not reach the amount according to the benefit condition set for the electronic money, the display mode of the display 60 indicating the balance of the electronic money is changed. With this configuration, the user can easily recognize that the balance of the electronic money does not reach the amount according to the benefit condition.

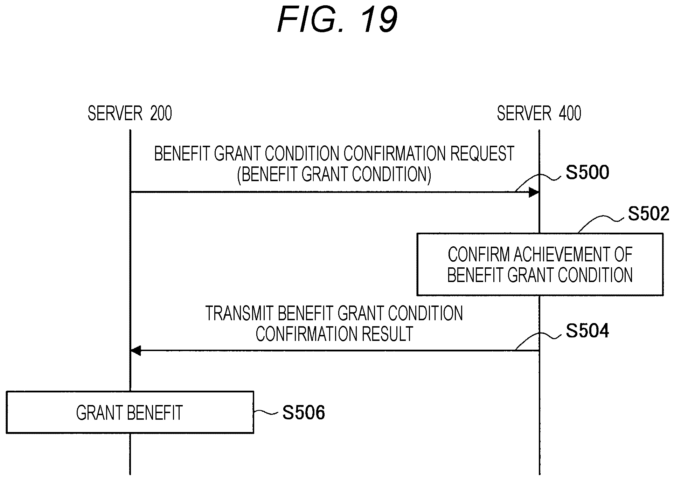

An example in which the display 60 indicating the balance of the electronic money is displayed has been described above. An information processing method when a benefit is granted will be described below. Fig. 19 is a diagram illustrating an information processing method when a benefit is granted. As illustrated in Fig. 19, a benefit is granted by exchanging information between the server 200 of the payment information display system of the present embodiment and a server 400 managed by an electronic money business operator.

In the server 200 of the payment information display system of the present embodiment, the benefit conditions as described with reference to Fig. 16 are stored. Furthermore, in the server 400 managed by the electronic money business operator, information regarding the user, and the date and time of use, the used shop, the amount of use, and the like of electronic money are stored as a history of use of electronic money.

Such information regarding the history of use of electronic money stored in the server 400 managed by the electronic money business operator is information related to the privacy of the user and thus it is not preferable to transmit and receive between terminals. Therefore, in the present embodiment, the server 200 of the payment information display system inquires of the server 400 managed by the electronic money business operator as to whether or not the benefit condition is satisfied.

That is, in S500 of Fig. 19, the server 200 of the payment information display system transmits a benefit condition confirmation request to the server 400 managed by the electronic money business operator. Here, the benefit condition confirmation request includes the benefit condition. Specifically, the server 200 inquires of the server 400 as to whether or not the user indicated by a specific user ID satisfies the benefit conditions illustrated in Fig. 16.

Next, in step S502, the server 400 searches for the history of use of the user using the user ID, and confirms whether or not the received benefit conditions are satisfied. Then, in S504, the server 400 transmits a benefit condition confirmation result to the server 200. Here, the benefit condition confirmation result may include the user ID, information regarding the confirmed benefits, and the confirmation results (affirmative responses or negative responses).

Then, in step S506, in the server 200, a benefit is granted on the basis of the received benefit condition confirmation result. That is, in a case where the affirmative response is received as a confirmation result, the server 200 grants the confirmed benefit to the user identified by the user ID. Meanwhile, in a case where the negative response is received as a confirmation result, the server 200 does not grant the benefit.

As described above, in the present embodiment, the server 200 of the payment information display system inquires of the server 400 managed by the electronic money business operator as to whether or not the benefit condition is satisfied. With this procedure, the benefit is granted without the information related to the privacy of the user being exchanged between terminals.

Note that, in the example described above, whether or not the benefit condition is achieved is confirmed by the server 200 transmitting the benefit condition confirmation request to the server 400. However, in a case where the benefit condition can be confirmed using information stored in the second storage unit 108 of the smartphone 100, the server 200 may determine whether or not the benefit condition is achieved, using the information stored in the second storage unit 108 of the smartphone 100.

At this time, the second storage unit 108 of the smartphone 100 stores the user ID, and the type, the date and time of use, and the payment amount of electronic money registered for use in the smartphone 100. Then, the smartphone 100 may transmit these pieces of information to the server 200 such that the server 200 confirms the benefit condition on the basis of the information supplied from the smartphone 100.

Furthermore, in a case where the server 200 can know which type of electronic money has been used by the user to make a payment at which shop, the server 200 may determine the achievement of the benefit condition in the server 200 without transmitting the benefit condition confirmation request to the server 400. Note that the information regarding which type of electronic money has been used by the user to make a payment at which shop may be acquired, for example, by acquiring, from a reader installed at the shop, the reader identification information, and information regarding the user ID of the user who has used the electronic money, the type of electronic money, and the payment amount. In addition, similarly, the server 200 may acquire identification information regarding a product or service purchased with electronic money, from POS data accumulated in the cash register or a center to determine the achievement of the benefit condition on the basis of the acquired information.

### <4. Supplementary Items>

The favorable embodiments of the present disclosure have been described in detail thus far with reference to the accompanying drawings. However, the technological scope of the present disclosure is not limited to these examples. It is clear that a person with average knowledge on the technological field of the present disclosure can arrive at various variations or modifications within a range of the technological spirit disclosed in the claims and as a matter of course, these variations or modifications are part of the technological scope of the present disclosure.

For example, in the above-described example, the smartphone 100 and the server 200 have been described as examples of the information processing apparatus that executes the information processes of the present embodiment. However, the above-mentioned apparatus is not restricted to these examples. For example, as a substitute for the smartphone 100, an information processing apparatus such as a laptop computer, a tablet computer, a desktop computer, a personal digital assistant (PDA), a wearable device, or an in-vehicle device may be used. Furthermore, the server 200 may not be connected to another apparatus by wire, and may be a portable computer.

In addition, in the payment method display system of the present embodiment, the display 10 indicating the plurality of types of available electronic money may be displayed at positions defined with respect to the display 20 representing a shop. For example, in Fig. 6, the display 10A indicating the electronic money A may be preset so as to be displayed at the upper right of the display 20 representing the shop. Furthermore, the display 10B indicating the electronic money B may be preset so as to be displayed at the lower right of the display 20 indicating the shop. In addition, the display 10C indicating the electronic money C may be preset so as to be displayed at the upper left of the display 20 representing the shop. Likewise, the display 10D indicating the electronic money D may be preset so as to be displayed at the lower left of the display 20 representing the shop. Moreover, the positions of the display 10 indicating the types of electronic money with respect to the display 20 representing the shop may be set by the user. By thus presetting the positions of the display 10 indicating the types of electronic money with respect to the display 20 representing the shop, the user can more easily recognize the types of available electronic money.

Furthermore, in the above-described example, the server 200 generates the map data. However, the map data may be generated by the smartphone 100. Specifically, the smartphone 100 may perform the processes in S108 of Fig. 7, S212 of Fig. 9, S310 of Fig. 15, and S414 of Fig. 18. In addition, the smartphone 100 may perform processes related to the benefit condition. Specifically, the smartphone 100 may perform the processes in S308 of Fig. 15 and S408 of Fig. 18.

Furthermore, a computer program may be provided to cause the processing unit 102 of the smartphone 100 and the processing unit 202 of the server 200 to perform the actions as described above using Figs. 7, 8, 9, 15, 18, and 19. In addition, a storage medium storing such a program may be provided.

Meanwhile, the processing unit 102 of the smartphone 100 may have a plurality of functional blocks. For example, the processing unit 102 of the smartphone 100 may include a registration information confirmation unit that confirms information regarding electronic money registered for use, a communication control unit that controls the first communication unit 104 and the second communication unit 106, a display control unit that controls the display unit 112, and an information acquisition unit that acquires information from the storage unit.

Furthermore, the processing unit 202 of the server 200 may also have a plurality of functional blocks. For example, the processing unit 202 of the server 200 may include a communication control unit that controls the communication unit 204, a display object service confirmation unit that confirms a service as an object to be displayed, a map data generation unit that generates the map data, a benefit condition confirmation unit that confirms the benefit condition, a balance information generation unit that generates information indicating an insufficient balance, and a benefit condition confirmation request generation unit that generates the benefit condition confirmation request.

### <5. Conclusion>

As described thus far, in the payment information display system of the present disclosure, the display 10 indicating the plurality of types of electronic money is displayed on a map. Such a payment information display system allows the user to easily recognize the types of electronic money that can be used, on the map. Furthermore, in the payment information display system of the present disclosure, information regarding a benefit for the use of electronic money is displayed on the map. This allows the user to easily recognize a benefit for the use of electronic money on the map.

In addition, in the present embodiment, a benefit is granted on the basis of the use of a plurality of types of electronic money. This promotes the use of a plurality of types of electronic money.

Note that configurations as described below are also within the technological scope of the present disclosure.
(1) An information processing apparatus including a processing unit that displays a display indicating types of a plurality of payment methods available at a predetermined place on a map, in association with the predetermined place.
(2) The information processing apparatus according to (1) above, in which the processing unit displays the display indicating types of the plurality of payment methods, in association with the predetermined place on the basis of acquired types of the payment methods.
(3) The information processing apparatus according to (2) above, in which the processing unit further displays, on the basis of the acquired types of the payment methods, a display indicating types of the payment methods available at the predetermined place, the types of the payment methods being different from the acquired types of the payment methods, in association with the predetermined place.
(4) The information processing apparatus according to any one of (1) to (3) above, in which the processing unit displays a simplified display of a display representing types of the payment methods, on the basis of an acquired demand.
(5) The information processing apparatus according to any one of (1) to (4) above, in which the processing unit further displays information relevant to the payment methods on the map.
(6) The information processing apparatus according to (5) above, in which the information relevant to the payment methods includes information regarding a benefit related to the payment methods.
(7) The information processing apparatus according to (6) above, in which information regarding a benefit related to the payment methods includes information indicating contents of the benefit related to the payment methods.
(8) The information processing apparatus according to (6) above, in which information regarding a benefit related to the payment methods includes information indicating that there is a benefit related to the payment methods.
(9) The information processing apparatus according to (8) above, in which the processing unit displays information indicating that there is a benefit related to the payment methods so as to be superimposed on a display indicating types of the payment methods.
(10) The information processing apparatus according to any one of (1) to (9) above, in which the payment methods include payment by electronic money.
(11) The information processing apparatus according to (10) above, in which the processing unit displays different displays between the predetermined place where the electronic money is available and the predetermined place where the electronic money is not available.
(12) The information processing apparatus according to (10) or (11) above, in which the processing unit displays a balance of the electronic money acquired as information relevant to a type of the electronic money.
(13) The information processing apparatus according to (12) above, in which the processing unit compares an amount according to a condition of a benefit of the electronic money with a balance of the electronic money, and changes a display mode of the balance of the electronic money in a case where the balance of the electronic money does not reach the amount according to the condition of the benefit of the electronic money.
(14) The information processing apparatus according to (12) or (13) above, in which the processing unit generates map data such that a display for charging the electronic money is presented by a user performing a predetermined operation on a display of the balance of the electronic money.
(15) The information processing apparatus according to any one of (1) to (14) above, in which, on the basis of use of one or two or more types of the payment methods, the processing unit grants a benefit for a payment made by the payment methods.
(16) The information processing apparatus according to (15) above, in which the processing unit grants a benefit for a payment made by the payment methods on the basis of at least one of a place of use, an amount of use, a use period, or a use frequency of the payment methods.
(17) The information processing apparatus according to (15) or (16) above, in which
   a group for receiving a benefit for a payment made by the payment methods is set, and
   the processing unit grants the benefit on the basis of use of the payment methods by a user belonging to the group.
(18) An information processing method causing a computer to display a display indicating types of a plurality of payment methods available at a predetermined place on a map, in association with the predetermined place.
(19) A program causing a computer to implement a function of displaying a display indicating types of a plurality of payment methods available at a predetermined place on a map, in association with the predetermined place.

### REFERENCE SIGNS LIST

- 100: Smartphone
- 200: Server
- 300: Network

## Claims

1. An information processing apparatus comprising a processing unit that displays a display indicating types of a plurality of payment methods available at a predetermined place on a map, in association with the predetermined place.

2. The information processing apparatus according to claim 1, wherein the processing unit displays the display indicating types of the plurality of payment methods, in association with the predetermined place on a basis of acquired types of the payment methods.

3. The information processing apparatus according to claim 2, wherein the processing unit further displays, on a basis of the acquired types of the payment methods, a display indicating types of the payment methods available at the predetermined place, the types of the payment methods being different from the acquired types of the payment methods, in association with the predetermined place.

4. The information processing apparatus according to claim 1, wherein the processing unit displays a simplified display of a display representing types of the payment methods, on a basis of an acquired demand.

5. The information processing apparatus according to claim 1, wherein the processing unit further displays information relevant to the payment methods on the map.

6. The information processing apparatus according to claim 5, wherein the information relevant to the payment methods includes information regarding a benefit related to the payment methods.

7. The information processing apparatus according to claim 6, wherein information regarding a benefit related to the payment methods includes information indicating contents of the benefit related to the payment methods.

8. The information processing apparatus according to claim 6, wherein information regarding a benefit related to the payment methods includes information indicating that there is a benefit related to the payment methods.

9. The information processing apparatus according to claim 8, wherein the processing unit displays information indicating that there is a benefit related to the payment methods so as to be superimposed on a display indicating types of the payment methods.

10. The information processing apparatus according to claim 1, wherein the payment methods include payment by electronic money.

11. The information processing apparatus according to claim 10, wherein the processing unit displays different displays between the predetermined place where the electronic money is available and the predetermined place where the electronic money is not available.

12. The information processing apparatus according to claim 10, wherein the processing unit displays a balance of the electronic money acquired as information relevant to a type of the electronic money.

13. The information processing apparatus according to claim 12, wherein the processing unit compares an amount according to a condition of a benefit of the electronic money with a balance of the electronic money, and changes a display mode of the balance of the electronic money in a case where the balance of the electronic money does not reach the amount according to the condition of the benefit of the electronic money.

14. The information processing apparatus according to claim 12, wherein the processing unit generates map data such that a display for charging the electronic money is presented by a user performing a predetermined operation on a display of the balance of the electronic money.

15. The information processing apparatus according to claim 1, wherein, on a basis of use of one or two or more types of the payment methods, the processing unit grants a benefit for a payment made by the payment methods.

16. The information processing apparatus according to claim 15, wherein the processing unit grants a benefit for a payment made by the payment methods on a basis of at least one of a place of use, an amount of use, a use period, or a use frequency of the payment methods.

17. The information processing apparatus according to claim 15, wherein
a group for receiving a benefit for a payment made by the payment methods is set, and
the processing unit grants the benefit on a basis of use of the payment methods by a user belonging to the group.

18. An information processing method causing a computer to display a display indicating types of a plurality of payment methods available at a predetermined place on a map, in association with the predetermined place.

19. A program causing a computer to implement a function of displaying a display indicating types of a plurality of payment methods available at a predetermined place on a map, in association with the predetermined place.
